# EUROPÄISCHE PATENTSCHRIFT

(11) **EP 3 539 085 B1**
(45) Veröffentlichungstag und Bekanntmachung des Hinweises auf die Patenterteilung: **04.05.2022**
(21) Anmeldenummer: 17801666.3
(22) Anmeldetag: 14.11.2017
(51) Int. Cl.: G06T 7/73

(54) **3D-REFERENZIERUNG**
3D LOCALIZATION
3D LOCALISATION

(30) Priorität: 14.11.2016 DE 102016222319
(43) Veröffentlichungstag der Anmeldung: 18.09.2019
(73) Patentinhaber: Fraunhofer-Gesellschaft zur Förderung der angewandten Forschung e.V., 80686 München (DE)
(72) Erfinder: BODENSTEINER, Christoph, 76332 Bad Herrenalb (DE); ARENS, Michael, 76461 Muggensturm (DE)
(74) Vertreter: Pfitzner, Hannes
(86) Internationale Anmeldenummer: PCT/EP2017/079191
(87) Internationale Veröffentlichungsnummer: WO 2018/087392

(56) Entgegenhaltungen:
- US-A1- 2007 027 591
- US-A1- 2011 043 627
- US-A1- 2015 199 556
- BODENSTEINER C ET AL: "Single Frame Based Video Geo-Localisation Using Structure Projection", 2015 IEEE INTERNATIONAL CONFERENCE ON COMPUTER VISION WORKSHOP (ICCVW), IEEE, 7. Dezember 2015 (2015-12-07), Seiten 1036-1043, XP032865066, DOI: 10.1109/ICCVW.2015.136 [gefunden am 2016-02-11]
- CHRISTOPH BODENSTEINER ET AL: "Accurate Single Image Multi-modal Camera Pose Estimation", 10. September 2010 (2010-09-10), TRENDS AND TOPICS IN COMPUTER VISION, SPRINGER BERLIN HEIDELBERG, BERLIN, HEIDELBERG, PAGE(S) 296 - 309, XP047006574, ISBN: 978-3-642-35739-8 Zusammenfassung Abschnitt 1.1, "Pose from 2D/3D Point Correspondences" Abschnitt 3

## Beschreibung

Ausführungsbeispiele der vorliegenden Erfindung beziehen sich auf ein Verfahren zur 3D-Referenzierung sowie auf eine entsprechende Vorrichtung und ein Computerprogramm. Bevorzugte Ausführungsbeispiele beziehen sich auf ein Verfahren zur Geo-Referenzierung von Bildinhalten und zur Kalibrierung von Videokameras mit geo-referenzierten 2D-Hintergrundmodellen.

Eine Geo-Referenzierung von Bildinhalten ist beispielsweise bei Videonetzwerken notwendig, um anhand der Position zu erkennen, welche Objekte sich gerade im Bildfeld der jeweiligen Videoaufnahme befinden. Die Bild-Daten eines Videonetzwerks zeigen meist nur einen begrenzten Ausschnitt der Umwelt. Daher ist es meist nötig, die geometrische Anordnung in einer Karte-Lage-Darstellung zu visualisieren.

Hierbei wird üblicherweise die Position der Kamera und/oder die Schnittfläche des Sichtfelds (der sogenannte Footprint) auf einer Karte (wie z. B. einer Orthoaufnahme) markiert. Diese Markierung entspricht dem Schnitt des Sichtfelds mit der Orthodarstellung. Die Orthodarstellung kann beispielsweise ein Luftbild, ein Orthofoto, eine Geländekarte, ein sogenanntes "TOM" (tatsächliches Orthomosaik in Kombination mit einem optionalen digitalen Oberflächenmodell) oder eine andere Geländedraufsicht sein. Durch die Einbindung georeferenzierter Daten, d. h. also Position von spezifischen Objekten, lassen sich in der Folge Geo-Koordinaten für im Videonetzwerk detektierte Objekte ermitteln und auch im Videonetzwerk übergeben. Dies erleichtert darüber hinaus auch die Implementierung von Multi-Kamera Tracking Anwendungen. Um diese Funktionalität zu implementieren, müssen hierbei die potenziell nicht überlappenden Sichtfelder der Kameras dementsprechend mit georeferenziertem Material kalibriert werden.

Oft unterliegen Videonetzwerke einer häufigen Neu- bzw. Umkonfiguration und Erweiterung, z. B. durch Anbringen neuer Kameras, bzw. Veränderung durch intrinsische und extrinsische Einflüsse, z. B. PTZ-Kameras (PAN-Tilt-Zoom-Kamera, gleichbedeutend mit Schwenk-Neige-Zoom-Kamera). Diese Videonetzwerke haben daher nur eine begrenzte Wiederholgenauigkeit und müssen immer wieder mit dem Problem der Dekalibrierung ihrer Georeferenzen über die Zeit zurechtkommen. Hier wäre eine vollkommen automatische geo-referenzierte Neukalibrierung bzw. allgemein eine vollkommen automatische 3D-Referenzierung wünschenswert.

Im Stand der Technik gibt es hierzu zahlreiche Ansätze: Die Kalibrierung für den oben genannten Anwendungsfall (Geo-Referenzierung mit 2D-Kartenmaterial) erfolgt üblicherweise durch die manuelle Annotation von korrespondierenden Bild- und 2D-Kartenpunkten für jede einzelne Kamera. Hierzu wird im Fall einer zweidimensionalen Karte direkt eine perspektivische Projektion errechnet (Homographie), welche eine Abbildung von Kamera-Bildpunkten auf Bildpunkten der Übersichtskarte ermöglicht (Abbildung von Kameraebene auf eine Kartenebene). Die manuelle Annotation wird hierbei meist von Experten durchgeführt und erlaubt keine automatische Rekalibrierung durch den Nutzer, da der flache Aspektwinkel von Überwachungskameras in Bezug zu einer 2D-Karte (z. B. Orthofoto) oftmals keine automatische Korrespondenzfindung erlaubt. Bei einer Änderung des Kamera-Setups oder durch externe Einflüsse muss diese Prozedur für jede einzelne Kamera wiederholt werden.

Auch in der Patentliteratur sind einige Kalibrierungsverfahren für Kameranetzwerke genannt. So zeigt beispielsweise die DE10340023B3 eine Selbstkalibrierung eines Kamerasystems basierend auf einem Gleichungssystem. Die DE102006055758A1 beschreibt ein Kalibrierverfahren mittels optischer Messungen. Die DE102007001649A1 beschreibt ein Verfahren zur Selbstkalibrierung einer Kameraüberwachung.

Die US20070027591 beschreibt ein Verfahren zur Gewinnung von echtzeitgeographischen Informationen.

Weitere Stand der Technik-Schriften bildet die Veröffentlichung von C. Bodensteiner unter dem Titel "Single Frame Based Video Geo-Localisation using Structure Projection" und mit dem Titel "Accurate Single Image Multi-Modal Camera Pose Estimation". Darüber hinaus sei auch noch auf die US 2015/199556 A1, US 2007/027591 A1 und US 2011/043627 A1 verwiesen.

Stand der Technik Ansätze basieren insbesondere darauf, dass Positionen von einzelnen Objekten im Bildfeld bekannt sind oder mittels zusätzlicher technischer Ausrichtung, wie z.B. GPS-Sensor ermittelt werden können. Zur Komplexitätsreduzierung besteht deshalb der Bedarf nach einem verbesserten Ansatz.

Aufgabe der vorliegenden Erfindung ist es, ein Konzept zu schaffen, das ausgehend von einer minimalen Informationsbasis eine automatisierte 3D-Referenzierung ermöglicht.

Die Aufgabe wird durch die unabhängigen Patentansprüche gelöst.

Ein Ausführungsbeispiel schafft ein Verfahren zur 3D-Referenzierung. Das Verfahren umfasst die Schritte "Aufnehmen einer Kameraaufnahme aus einer ersten Perspektive mit mindestens vier homologen Punkten bzgl. der ersten Aufnahme" und "Erhalten einer Orthodarstellung einer Gegend, in der die mindestens vier homologe Punkte liegen". In einem dritten Schritt erfolgt dann das "Registrieren von Bildinhalten der ersten Aufnahme in der Orthodarstellung". Hierzu wird die Orthodarstellung in einem weiteren Schritt "in die eine mit der ersten Perspektive vergleichbare Perspektive (oder die erste Perspektive) transformiert, um eine virtuelle Ansicht des Orthofotos zu erhalten". In einem letzten Schritt wird dann "die virtuelle Ansicht des Orthofotos mit der ersten Aufnahme überlagert, um eine überlagerte erste Aufnahme zu erhalten". Weitere Verfahrensschritte, wie "Aufnehmen aus einer zweiten Kameraperspektive in einer zweiten Aufnahme", Rekonstruieren von 3D-Positionen der mindestens vier homologen auf Basis der ersten und zweiten Aufnahme in einem Kamerakoordinatensystem" sowie "3D-Rekonstruieren von Objekten, zu welchen die mindestens vier homologen Punkte gehören", sind in Anspruch 1 definiert.

Ausführungsbeispielen der vorliegenden Erfindung liegt die Erkenntnis zugrunde, dass es (alleine) ausgehend von den Bildinhalten, die in einer Standardkameraaufnahme (annähernd parallel zur Erdoberfläche) und in der Orthoaufnahme (senkrecht zur Erdoberfläche) enthalten sind, ein Mapping der Parallelaufnahme zu der Orthodarstellung erfolgen kann. Die Orthodarstellung umfasst Positionsinformationen (z.B. Geo-Referenzen) zu den dargestellten oder zumindest ein paar wenigen dargestellten Punkten, so dass ausgehend von dem Mapping dann jedem Punkt und insbesondere auf jedem homologen Punkt in der "Parallelaufnahme" eine Geo-Position zugeordnet werden kann. Für das Mapping wird die Perspektive der Orthodarstellung virtuell verkippt, so dass die Perspektive der Parallelaufnahme und der virtuellen Orthodarstellung im Wesentlichen gleich ist, d.h. identisch / passgenau oder zumindest vergleichbar ist (ähnliche, geringfügig versetzte Perspektive). Anders ausgedrückt sucht das beschriebene Verfahren dabei aus virtuell transformierten Ansichten des Orthofotos korrespondierende Strukturen mit dem Kamerabild und errechnet eine vergleichbare oder sogar passgenaue Transformation (z.B. Homographie oder bei bekannten intrinsischen Parametern der Kamera die Pose der Kamera), welche das Orthofoto (passgenau) auf die bestimmten Strukturen des Kamerabilds abbildet. Somit ist es also möglich, ohne zusätzliche externe Informationen eine automatische Geo-Referenzierung von Bildinhalten der Kameraaufnahme mit der 2D-Karte (der Orthodarstellung) allein bildbasiert durchzuführen. Dieser bildbasierte Ansatz ermöglicht nicht nur eine reduzierte Komplexität mit einfachen technischen Mitteln, d. h. ohne externe Sensoren, wie GPS-Sensoren, sondern erhöht auch die Genauigkeit, da es durch externe Sensoren häufig zu Ungenauigkeiten bei der Anpassung der Bodenebene im Orthofoto und der 3D-Rekonstruktion kommt.

Entsprechend weiteren Ausführungsbeispielen umfasst das Verfahren den Schritt des Registrierens der mindestens vier homologen Punkte in der virtuellen Ansicht. Durch diese Registrierung sind dann Positionsinformationen zu den vier homologen Punkten verfügbar und registriert.

Entsprechend weiteren Ausführungsbeispielen umfasst das Verfahren zusätzlich den Schritt des Aufnehmens der mindestens vier homologen Punkte aus einer zweiten Perspektive in einer zweiten Aufnahme. Hierbei ist die zweite Perspektive beispielsweise eine (zur Seite) verschobene Position infolge einer Kamerabewegung. Alternativ kann dieses Verfahren auch für einen Vielzahl von weiteren Aufnahmen von einer Vielzahl von weiteren Positionen wiederholt werden, was typisch ist für eine (bewegte) Videokamera. Ausgehend von der zweiten Aufnahme oder der Vielzahl von weiteren Aufnahmen (des Videostroms) kann nun eine 3D-Rekonstruktion des Objekts zugehörend zu den mindestens vier homologen Punkte und hierbei gleichzeitig der von der 3D-Position desselben in einem Kamerakoordinatensystem begonnen werden. Dieses Kamerakoordinatensystem ist infolge der Überlagerung der virtuellen Ansicht der Orthodarstellung mit der ersten Aufnahme auf einem Geo-Koordinatensystem bzw. allgemein auf ein bekanntes Koordinatensystem gemappt, so dass dann auch noch die absolute Position der homologen Punkte bekannt ist. Im Ergebnis ist dann vorteilhafter Weise für jedes dreidimensional dargestellte und auf die virtuelle Orthodarstellung gemappte Objekt die Position im Geokoordinatensystem bekannt. Ein weiterer Vorteil hierbei ist, dass sich durch die Vielzahl der Positionsbestimmungen eine Optimierung der Positionen ergibt, so dass die Genauigkeit wächst.

Entsprechend Ausführungsbeispielen erfolgt das Transformieren der Orthoaufnahme in die erste Perspektive durch Ermittlung der Schnittpunkte der Sichtstrahlen zugehörig zu den Bildinhalten der ersten Aufnahme mit der Orthodarstellung. Diese Ermittlung der Sichtdarstellung kann beispielsweise durch eine 3D-Ähnlichkeitstransformation mit beispielsweise 7 Freiheitsgraden erfolgen. Hierzu kann man sich entsprechend weiteren Ausführungsbeispielen einem Inlieralgorithmus bedienen. Der Vorteil dieses Verfahrens ist, dass insbesondere auf die Blickwinkelbestimmung und die Generierung einer Überlagerung einer Kameraaufnahme und der Orthodarstellung und nicht auf die absolute Kameraposition abgestellt wird, was insbesondere bei Kameras mit engem Blickwinkel vorteilhaft ist. Deshalb erfolgt das Verfahren entsprechend Ausführungsbeispielen unabhängig von der Bestimmung der Kameraposition.

Weitere Ausführungsbeispiele schaffen ein Computerprogramm zur Durchführung des obigen Verfahrens.

Ein weiteres Ausführungsbeispiel schafft eine Vorrichtung, die die Schritte bei der 3D-Referenzierung durchführt. Hierbei ist es vorteilhaft, dass ausgehend von dieser Vorrichtung eine Kamera selbstständig kalibriert werden kann. Ein weiteres Ausführungsbeispiel bezieht sich auf ein System umfassend zumindest eine Kamera oder ein Kameranetzwerk und eine entsprechende Vorrichtung.

Weiterbildungen sind in den Unteransprüchen definiert. Ausführungsbeispiele der vorliegenden Erfindung werden nachfolgend unter Bezugnahme auf die beiliegenden Figuren erläutert. Es zeigen:
- Fig. 1a: ein schematisches Flussdiagramm eines Verfahrens zur Geo-Referenzierung entsprechend einem Vergleichsbeispiel (nicht Teil der beanspruchten Lehre);
- Fig. 1b: ein weiteres Flussdiagramm eines Verfahrens zur Geo-Referenzierung entsprechend einem erweiterten Ausführungsbeispiel;
- Fig. 2a, 2b: Beispiele für die Erzeugung eines Lokalisierungsindex gemäß einem Ausführungsbeispiel;
- Fig. 3a-3d: Beispiele für autonome Registrierung eines Kamerabilds mit einem Orthofoto gemäß einem Ausführungsbeispiel;
- Fig. 4a-4b: Beispiele für einen transformierten Lokalisierungsindex im Koordinatensystem der geo-referenzierten Daten gemäß einem Ausführungsbeispiel;
- Fig. 5a-5c: Beispiele für Lokalisierungen von Bildinhalten auf einer Karte als Orthoaufnahme gemäß einem Ausführungsbeispiel;
- Fig. 6a-6b: Beispiele für die Lokalisierung einer Kamera mit flachen Aspektwinkeln gemäß einem Ausführungsbeispiel; und
- Fig. 7a, 7b: Beispiele für die Registrierung eines Lokalisierungsindex mit einem digitalen Terrainmodell (DTM) gemäß einem Ausführungsbeispiel.

Bevor nachfolgend Ausführungsbeispiele der vorliegenden Erfindung anhand der Fig. im Detail erläutert werden, sei darauf hingewiesen, dass gleichwirkende Elemente und Strukturen mit gleichen Bezugszeichen versehen sind, so dass die Beschreibung derer aufeinander anwendbar bzw. austauschbar ist.

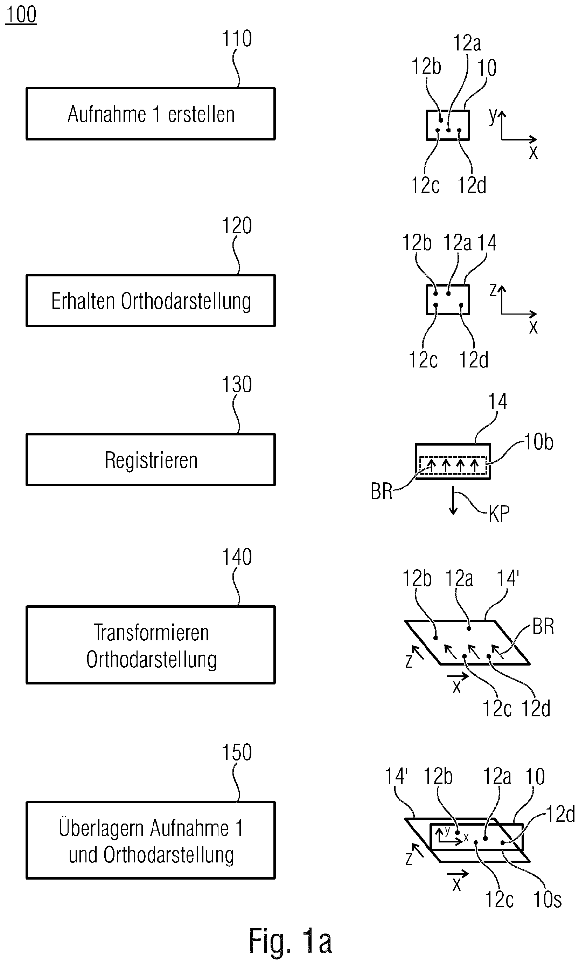

Fig. 1a zeigt ein schematisches Flussdiagramm des Basisverfahrens 100 beim 3D-Referenzieren als Vergleichsbeispiel (Basisverfahren für sich alleine nicht Teil der beanspruchten Lehre). Das Verfahren 100 umfasst die fünf Basisschritte 110, 120, 130, 140 und 150. In dem ersten Schritt 110 erfolgt das Aufnehmen einer ersten Aufnahme 10 aus einer ersten Perspektive, wobei die erste Aufnahme im Regelfall mindestens vier homologe Punkte 12a, 12b, 12c und 12d aufweist. Die Aufnahme 10 ist beispielsweise im Wesentlichen parallel zur Erdoberfläche aufgenommen, so dass sich für die Aufnahme eine x-y-Ausprägung darstellt, wobei y die Höhe und x die Breite ist. Auch wäre es denkbar, dass das so aufgespannte x-y-Koordinatensystem schräg oder leicht schräg im Raum liegt.

In dem nächsten Schritt 120 wird eine Orthodarstellung, wie z. B. ein Orthofoto, Luftbild oder eine Geländekarte gewonnen. Die Orthodarstellung ist mit dem Bezugszeichen 14 markiert und hat beispielsweise eine x-z-Ausdehnung, wobei z die Tiefe in dem durch den Vektor x und y aufgespannten Raum ist. In anderen Worten ausgedrückt heißt das, dass bei dem hier dargestellten Sonderfall sich die Orthodarstellung 14 mit der ersten Aufnahme 10 entlang der x-Achse schneidet, so dass durch die Kombination der zwei Aufnahmen 12 und 14 der x-y-z-Raum aufgespannt wird. Wie gesagt handelt es sich hier um einen Sonderfall, da es nicht zwingend erforderlich ist, dass die Orthodarstellung senkrechte Ausdehnungen in Bezug auf die Kamerakoordinaten der Aufnahme 10 hat. Das heißt also, dass die zugehörig zu dem Schritt 120 dargestellte z-Achse nicht zwingend orthogonal zu der x-y-Achse ausgerichtet sein muss.

Im nächsten Schritt erfolgt dann die Registrierung (im Sinne des Erkennens) der Aufnahme 10 und der Orthodarstellung 14 ausgehend von der Annahme, dass die Bildinhalte, wie z. B. die homologen Punkte 12a, 12b, 12c und 12d der ersten Aufnahme 10 auch in der Orthoaufnahme 14 enthalten sind. Dieser Schritt erfolgt beispielsweise unter Berücksichtigung der Sichtlinien - aus Sicht der Kameraaufnahme 10 - der in der Orthodarstellung 14 erkannten Features. An dieser Stelle sei angemerkt, dass das Verfahren nachfolgend exemplarisch anhand der sogenannten "homologen Punkte erläutert wird, dieses Verfahren jedoch auch auf Basis anderer Bildinhalte erfolgen kann (z.B. durch die Minimierung/Maximierung eines Abstandsmaßes/Ähnlichkeitsmaßes). An dieser Stelle sei zusätzlich als Exkurs angemerkt, dass die homologen Punkte deshalb homologe Punkte heißen, da sie in einem späteren Schritt mit einer zweiten Aufnahme oder mit zusätzlichen Aufnahmen "gematcht" werden können, um beispielsweise ausgehend von dem Homologie-Kriterium eine 3D-Rekonstruktion des zugehörigen Objekts durchzuführen.

In einem nachgelagerten Schritt 130 erfolgt dann das Registrieren der Bildinhalte der ersten Aufnahme 10 in der Orthodarstellung 14. Das heißt also, dass charakteristische Punkte, wie z. B. charakteristische Bildinhalte oder auch die oben erläuterten homologen Punkte der Aufnahme 10 in der Orthodarstellung 14 identifiziert werden, mit der Zielsetzung, die Kamerapose der Aufnahme 10 und hierbei insbesondere die Ansicht in Bezug auf die Orthodarstellung zu identifizieren. Dieses Ergebnis ist mittels des gestrichelten Bereichs innerhalb der Orthodarstellung 14 illustriert, wobei der gestrichelte Bereich mit dem Bezugszeichen 10b versehen ist. Wie anhand der Pfeile BR in dem gestrichelten Bereich 10b illustriert ist, stellt dies die Blickrichtung der Aufnahme 10 dar, d. h. also, dass die Kamera von irgendeinem Punkt in Richtung des Pfeils KP die Aufnahme 10 aufgenommen hat, wobei es für die nachfolgend erläuterte Registrierung vollkommen unbedeutend ist, an welchem Punkt die Kamera sich genau zum Zeitpunkt der Aufnahme befand. Es wird vielmehr nur auf den reinen Blickwinkel und die Sichtlinien der Bildinhalte der Aufnahme 10 abgestellt. Ausgehend von diesem Ergebnis wird nun in einem Schritt 140 auf Basis der Orthodarstellung eine virtuelle Ansicht der Orthodarstellung erzeugt. Hierzu erfolgt ein Transformieren der Orthodarstellung in die erste oder in eine mit der ersten Perspektive vergleichbare Perspektive. Das Ergebnis der Transformation ist die virtuelle Ansicht 14' der Orthoaufnahme. In Bezug auf diese virtuelle Ansicht 14' ist auch die Blickrichtung BR der ersten Aufnahme 10 hier mittels der Pfeile BR (vgl. Schritt 130) illustriert.

Diese virtuelle Ansicht 14' umfasst selbstverständlich auch die homologen Punkte. In der Orthoaufnahme 14 sind vorteilhafterweise die (Geo-)Positionen je Punkt bekannt, so dass die Positionen der homologen Punkte ebenfalls direkt zugeordnet sind. An dieser Stelle sei angemerkt, dass es erst einmal unabhängig ist, ob die homologen Punkte zum Registrieren (vgl. Schritt 130) genutzt wurden, so dass auch die Position der homologen Punkte gleich nach dem Schritt 140 bekannt ist, oder ob andere Features, wie z. B. sämtliche Features entlang der Schnittlinie (bzw. Schnittfläche) zwischen der Orthodarstellung 14 und der Aufnahme 10 zum Registrieren 130 genutzt wurden.

Das Ergebnis der Transformation 140 ist dann eine flache Darstellung der ebenen Orthodarstellung 14 entlang der x-y-z-Richtung, wobei diese in dem dreidimensionalen Raum aufgespannt ist (ohne dass diese Informationen im dreidimensionalen Raum, d. h. entlang der y-Achse hat). Hier wäre es vorteilhaft, wenn die Perspektive der virtuelle Ansicht 14' der ersten Perspektive entspricht, wobei es aber nicht zwingend erforderlich ist, wie nachfolgend gezeigt werden wird.

Im Schritt 150 wird nun eine Kombination der Aufnahme 10 mit der virtuellen Ansicht der Orthodarstellung 14' erzeugt. Hierzu wird die Aufnahme 10 bzw. das Kamerakoordinatensystem der Aufnahme 10 mit dem Koordinatensystem der Orthodarstellung 14 in Deckung gebracht, so dass sich also die Orthodarstellung 14 bzw. die virtuelle Ansicht derselben 14' und die Aufnahme 10 entlang der Schnittlinie 10s berühren.

Da die Aufnahme 10 die homologen Punkte 12a und 12b auch mit einer Höheninformation y darstellt, ist das Ergebnis der Überlagerung ein dreidimensionales Höhenprofil, wobei also sowohl die Positionen in x-y-z-Richtung der Features 12a und 12b bekannt sind.

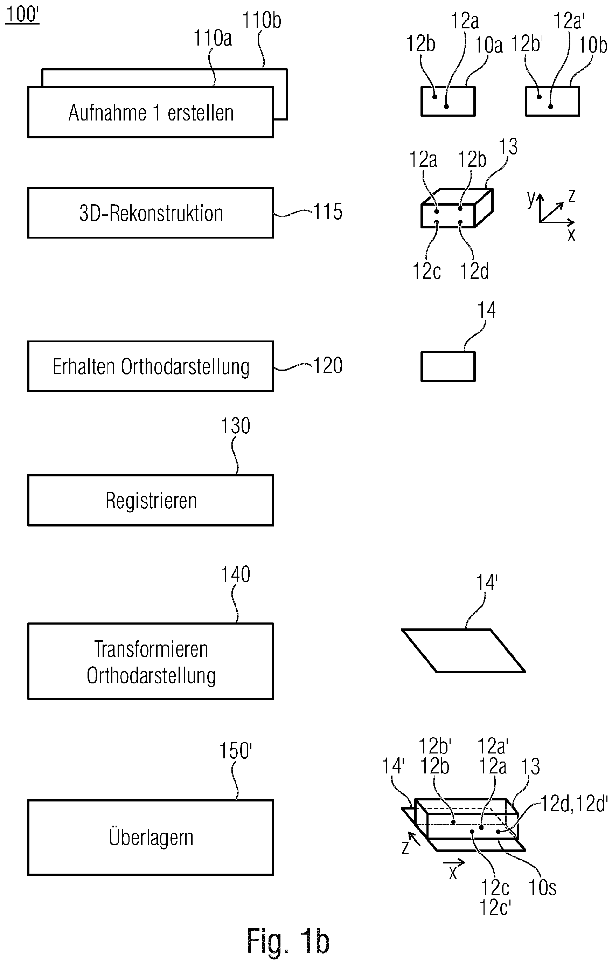

Da aber häufig homologe Features von anderen Punkten in der ersten Aufnahme 10 verdeckt sind, ist es aber für eine richtige 3D-Rekonstruktion beispielsweise einer Gegend oder eines Gebäudes notwendig, weitere Aufnahmen vergleichbar zu der ersten Aufnahme zu generieren. Dieses Ausführungsbeispiel, das die oder zumindest einige der im Zusammenhang mit Fig. 1a erläuterten Schritte verwendet, wird nachfolgend Bezug nehmend auf Fig. 1b erläutert.

Fig. 1b zeigt das Verfahren 100', bei dem eine Mehrzahl von Aufnahmen, hier zwei Aufnahmen in dem Schritt 110a bzw. 110b erstellt werden. Die Aufnahmen sind mit den Bezugszeichen 10a und 10b gekennzeichnet und unterscheiden sich insbesondere durch die Perspektive auf den Bereich mit den vier homologen Punkten. Beispielsweise wird die Kamera zwischen dem Schritt 110a und 110b horizontal verschoben und leicht angewinkelt, so dass weiterhin die homologen Punkte 12a und 12b bzw. 12a' und 12b' in den Bildern 10a und 10b vorliegen. Alternativ wäre es auch denkbar, dass die erste Aufnahme 10a einer Überwachungskamera entstammt, während die zweiten Aufnahmen 10b usw. mit einer weiteren Kamera, z.B. der einer Drohne gewonnen sind. Die Benennung der homologen Punkte als 12a' und 12b' resultiert daraus, dass es sich im Wesentlichen um die gleichen Punkte 12a und 12b (zum gleichen Objekt gehörend) handelt, diese allerdings aus einer etwas anderen Perspektive aufgenommen sind.

Ausgehend von den mindestens zwei Aufnahmen 10a und 10b oder von einer Vielzahl von zusätzlichen Aufnahmen, wie sie typischerweise bei einer Videosequenz verfügbar sind, erfolgt nun eine 3D-Rekonstruktion in dem Schritt 115. Wenn beispielsweise die Bilder 10a und 10b als Videosequenz vorliegen, kann man sich der sogenannten "Structure from Motion Technique" (SFM), Struktur aus Bewegung-Technik) bedienen. Diese SFM-Technik ist vergleichbar mit der Stereoskopie. Hierbei werden eben homologe Punkte, d. h. also Punkte zugehörig zu denselben Objekten in den unterschiedlichen Bildern 10a und 10b identifiziert und diese Punkte als Features über die Zeit getrackt, um dann aus der Vielzahl der unterschiedlichen Aufnahmen eine 3D-Position der homologen Punkte 12a und 12b bzw. 12a' und 12b' zu errechnen. Hierbei bezieht sich die Position in dem dreidimensionalen Rekonstruktionsraum 13 auf das Kamerakoordinatensystem und nicht auf das tatsächliche Geo-Koordinatensystem. Das Ergebnis ist also die Position der homologen Punkte im Raum aufgespannt durch das Kamerakoordinatensystem x, y und z.

Dieses Kamerakoordinatensystem x, y und z ist aber in der Regel nicht deckungsgleich mit dem x-z-Koordinatensystem aus der Orthodarstellung sein. Deshalb wird in nachgelagerten Schritten 120, 130 und 140 ausgehend von der Orthodarstellung eine Registrierung und eine Transformierung der Orthodarstellung durchgeführt, um dann in dem Schritt 150 das Kamerakoordinatensystem (x-y-z-Koordinatensystem) und Koordinatensystem der Orthodarstellung 14 zu matchen und eine Überlappung in dem Schritt 150' durchzuführen.

Das Ergebnis ist die Überlappung des bei einer 3D-Rekonstruktion entstandenen Raums 13 mit der virtuellen Orthodarstellung 14'. Durch dieses Verfahren 100 können volle 3D-Informationen gewonnen werden (vgl. Schritt 110a, 110b und 115), welche mit den Schritten 120, 130, 140 und 150' dann in die 2D-Kartenebene registriert werden. Die 3D-Informationen erlauben die automatische Kalibrierung (intrinsisch und extrinsisch) der Kameras bzw. einer Kamera in einem frei gewählten Koordinatensystem (Kamerakoordinatensystem) mit unbekannter Skalierung unbekannter Geo-Lokalisierung. In anderen Worten ausgedrückt heißt das, dass es durch das Verfahren 100' möglich ist, mit den Schritten 110a und 110b die Umgebung zu erfassen und ausgehend von der so optisch erfassten Umgebung mittels des Verfahrens 110' eine 3D-Rekonstruktion einer räumlich verorteten, geo-referenzierten Landmarkenpunktbrücke mit assoziierten Ansichtsmerkmalen 12a und 12b zu erzeugen und mit dem geo-referenzierten 2D-Hintergrundmaterial 14 zu registrieren.

An dieser Stelle sei angemerkt, dass die Schritte 120, 130 und 140 im Wesentlichen vergleichbar mit dem Verfahren 100 durchgeführt werden, wobei insbesondere für die Registrierung 130 wesentlich mehr Anhaltspunkte aufgrund der höheren Ausgangsdatenbasis vorliegen.

Bezug nehmend auf Fig. 1a und 1b sei darauf hingewiesen, dass der Schritt 110 bzw. Schritt 110a und 110b, in welchem zusätzliche Videodaten von der darzustellenden Umgebung generiert werden, nur einmalig erfolgen muss, wobei hierbei eine einzige Ansicht (vgl. 10 für die Schritte 120, 130 und 140) ausreicht, um die automatische Registrierung mit den zu nutzenden geo-referenzierten Daten durchzuführen.

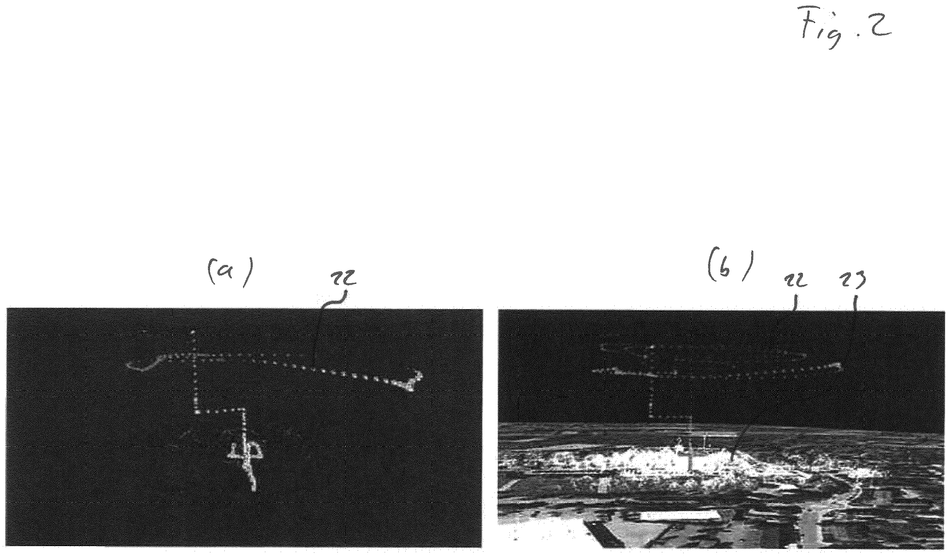

Nachfolgend wird Bezug nehmend auf Fig. 2a bis 5c ein erweitertes Ausführungsbeispiel anhand von konkreten Beispielen erläutert.

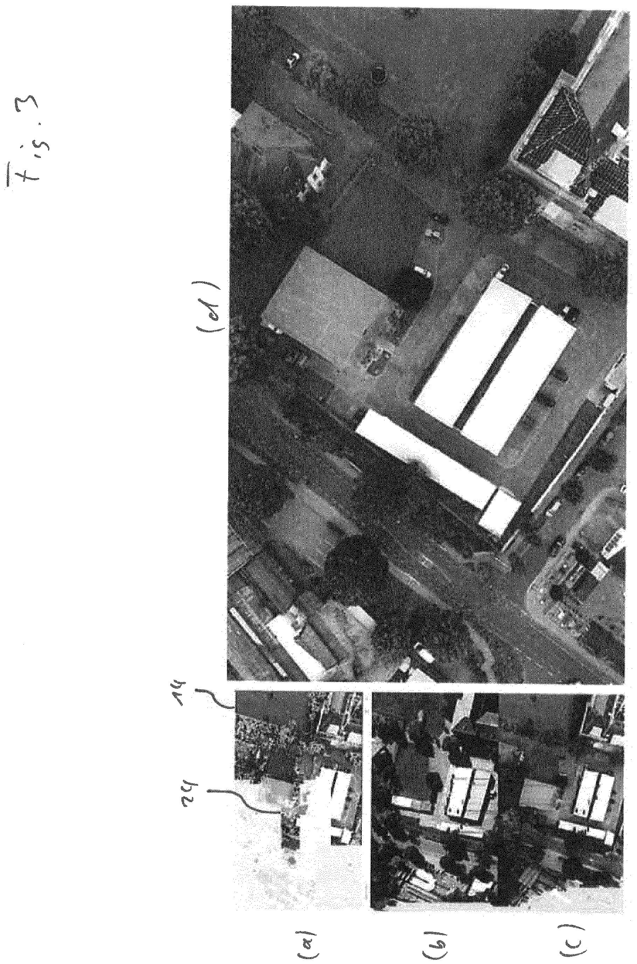

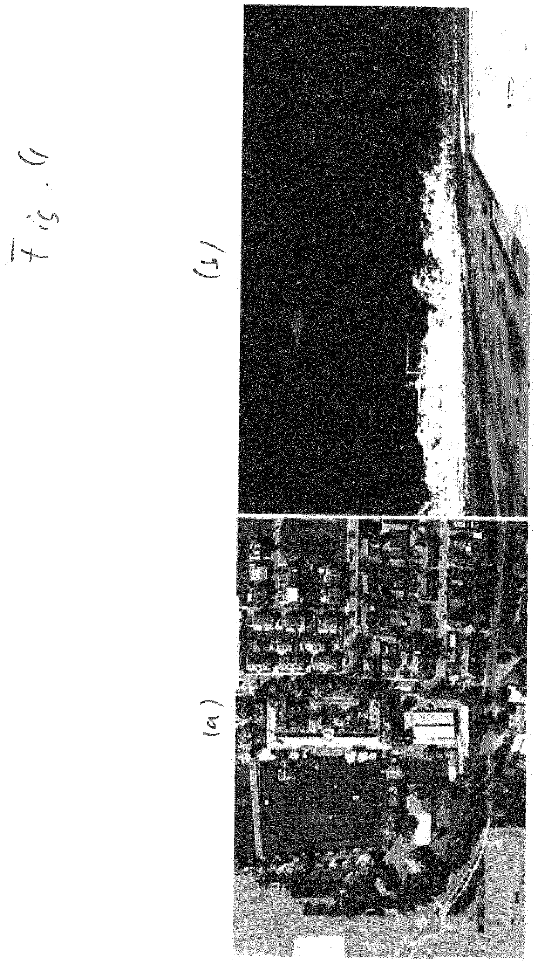

Dieser hier angewendete Workflow, um die automatische Geo-Referenzierung bzw. Übersichtsreferenzierung (vgl. Schritt 150') mit einer Karten-Lage-Darstellung 14 zu erreichen, umfasst wiederum einen mehrstufigen Prozess. Der Ablauf kann hierbei wie folgt beschrieben werden:
1. Aufnahme von zusätzlichem Videomaterial, hier beispielsweise von mindestens zwei Positionen. Das zusätzliche Videomaterial kann beispielsweise unter Zuhilfenahme einer Minidrohne gewonnen werden.
2. In einem nächsten Schritt wird dann die 3D-Rekonstruktion ohne eines Lokalisierungsindex mittels "Structure from Motion" durchgeführt. Dieser Schritt ist anhand der Fig. 2a und 2b illustriert.
   Fig. 2a zeigt ausgehend von der errechneten Kamerapose die Flugbahn der Minidrohne, welche mit dem Bezugszeichen 22 versehen ist. Ausgehend von den zusätzlichen Kameraaufnahmen wird dann eine 3D-Punktwolke 23 der Bildinhalte aus den Videodaten generiert, wobei diese Punktwolke im Wesentlichen aus homologen Punkten besteht. Diese 3D-Punktwolke bzw. 3D-Struktur ist in Fig. 2b dargestellt.
3. In einem nächsten Schritt erfolgt dann die Identifikation und Registrierung eines Einzelbilds (beispielsweise der Kamerapose aus Fig. 2b, mit den geo-referenzierten Hintergrunddaten, wie es in Fig. 3a bis 3d illustriert ist. Hierzu wird der Unterschied der Bestimmung der Kamerapose in Bezug auf eine virtuelle Ansicht der Orthoaufnahme durchgeführt. Wie anhand von Fig. 3a zu erkennen ist, wird ein Bereich in der Orthoaufnahme 14 identifiziert und dann das Kamerabild mit dem Orthofoto registriert, wie in den Fig. 3a-3c dargestellt ist. Wie in Fig. 3d dargestellt ist, ergibt sich dadurch eine Überlappung der Bildinhalte des Orthofotos, das in der entsprechenden Kamerapose gerendert wurde. Das Ergebnis dieses Schritts ist hierbei die Bestimmung einer überlagerten, virtuellen Ansicht.
4. In einem nächsten Schritt wird dann eine Bestimmung einer 3D-Ähnlichkeitstransformation mit beispielsweise sieben Freiheitsgraden durchgeführt. Hierbei wird mittels einer Projektion der Struktur des Lokalisierungsindexes auf eine gerenderte Ansicht der Geodaten und deren Schnitt mit den Sichtstrahlen des Videobilds durchgeführt (Bestimmung von 3D/3D-Korrespondenzen). Dies wird anhand von Fig. 4a und 4b deutlich. Fig. 4a zeigt die Orthoansicht des transformierten Lokalisierungsindex im Koordinatensystem der geo-referenzierten Daten, während Fig. 4b die Blickansicht darstellt. Dies kann z. B. mit Hilfe eines robusten Inlierverfahrens, z. B. RANSAC oder einer robusten Schätzfunktion (M-Estimator) durchgeführt werden, wobei automatisch die geometrisch korrekten Korrespondenzen der Bodenebene selektiert werden, was insbesondere im Hinblick auf Fig. 4b deutlich wird. Diese Inlierverfahren ermöglichen eine robuste Registrierung von 3D-Daten und 2D-Daten.

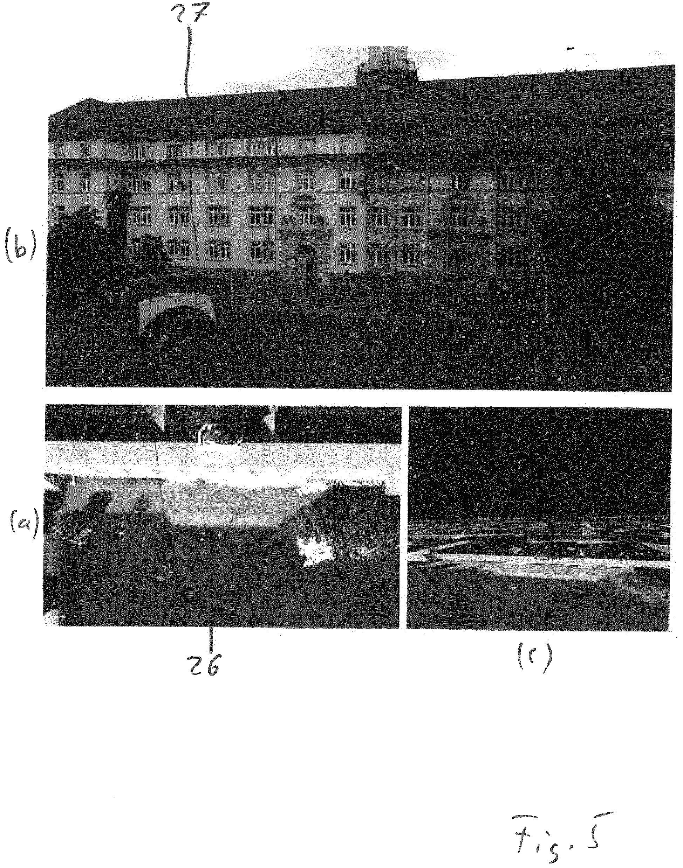

Zur Laufzeit können nun die Kamerapositionen des Kameranetzwerks mittels des Lokalisierungsindex bestimmt werden. Mit der 3D-Ähnlichkeitstranformation erfolgt die Geo-Referenzierung. Dadurch lassen sich Bildinhalte durch einen Schnitt der Sichtstrahlen in eine Karten-Lage-Darstellung überführen (vgl. Fig. 5a-5c).

Fig. 5a zeigt ein Beispiel für die Lokalisierung von Bildinhalten auf einer Kartendarstellung. Die Darstellung zeigt hierbei den Schnitt des Sichtstrahls 26 mit einer Markierung 27 in der Kameraaufnahme, welche in Fig. 5b dargestellt ist. Durch Kombination dieser zwei Aufnahmen kann dann entlang des Sichtstrahls die virtuelle Ansicht des Orthofotos auf Basis der Videodaten errechnet werden. Diese virtuelle Ansicht ist in Fig. 5c dargestellt. Dieses virtuelle Orthofoto mit den 3D-Bildinhalten aus Fig. 5c ist im Wesentlichen mit der Oblique-Ansicht aus Fig. 4b vergleichbar.

Jedem Punkt der einzelnen Objekte aus den Fig. 4b und 5c ist eine eindeutige Position im Geo-Koordinatensystem zugeordnet. Dadurch, dass eine Vielzahl von Bildern/Modellparameter in der 3D-Rekonstruktion verarbeitet wurde, ist die Ansicht auf die Karten-Lage-Darstellung der Objekte entsprechend Ausführungsbeispielen beliebig drehbar, so dass auch eine andere Perspektive als eine oben diskutierte oder genannte genutzt werden kann. Das heißt also, dass auch wenn oben davon ausgegangen wurde, dass die Orthoaufnahme in eine Perspektive vergleichbar mit der Kameraperspektive überführt wird, eine Transformation in eine andere Perspektive, die nicht der Kameraperspektive gleicht oder ähnelt entsprechend Ausführungsbeispielen möglich wäre. Das technische Alleinstellungsmerkmal des oben erläuterten Verfahrens ist die Entkopplung der 3D-3D-Korrespondenzfindung für die Bestimmung der Geo-Referenzierung bzw. 7D-Ähnlichkeitstransformation über einen 2D-/2D-erscheinungsbasierten Ansatz, welcher zur Bestimmung einer Überlagerung einer virtuellen 2D-Ansicht der geo-referenzierten Karte und eines Videobilds herangezogen wird. Hierbei können sich die 3D/3D-Korrespondenzen dann aufgrund von zusätzlichen geometrischen Beschränkungen durch die Rekonstruktion von 3D-Strukturpunkten mit den bestimmten Ansichten ergeben. Da dieses Verfahren insbesondere auf die Blickrichtung und nicht auf die Kameraposition abzielt, erlaubt dieses Verfahren auch den Einsatz von Kameras mit hoher Brennweite, deren Lokalisierung in Richtung der optischen Achse unbestimmt ist.

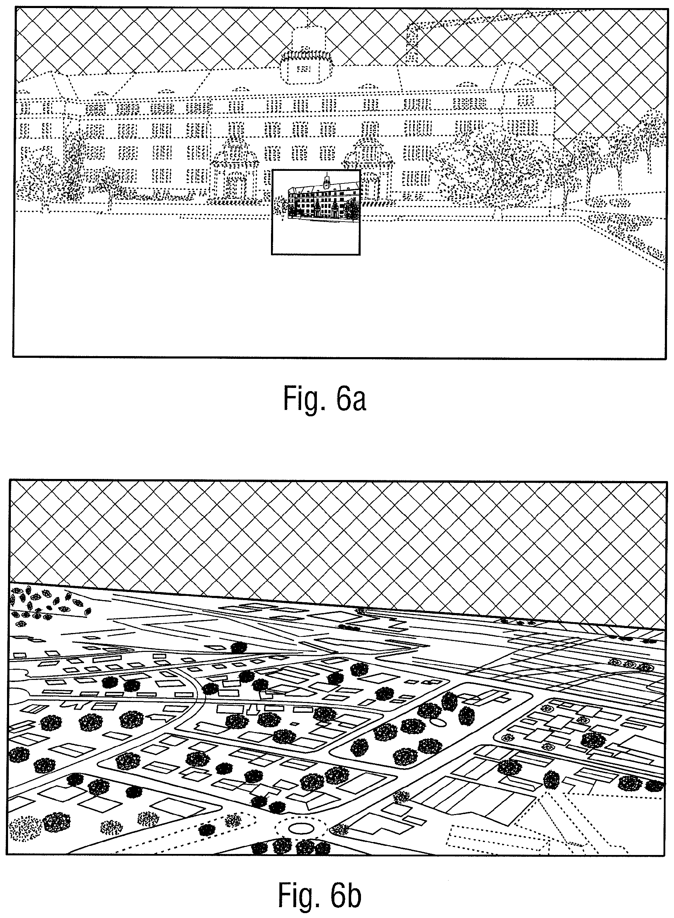

Bezug nehmend auf Fig. 6a-7b werden nun weitere Beispiele für besondere Konstellationen erläutert.

Fig. 6a zeigt ausgehend von einer Kamera mit einem flachen Aspektwinkel die Rekonstruktion der 3D-Strukturen auf Basis von Videodaten. Hierbei sind die Lokalisierungsdaten in Fig. 6a dargestellt, während dann in Fig. 6b die Lokalisierungsdaten in das Koordinatensystem des Orthofotos gemappt werden.

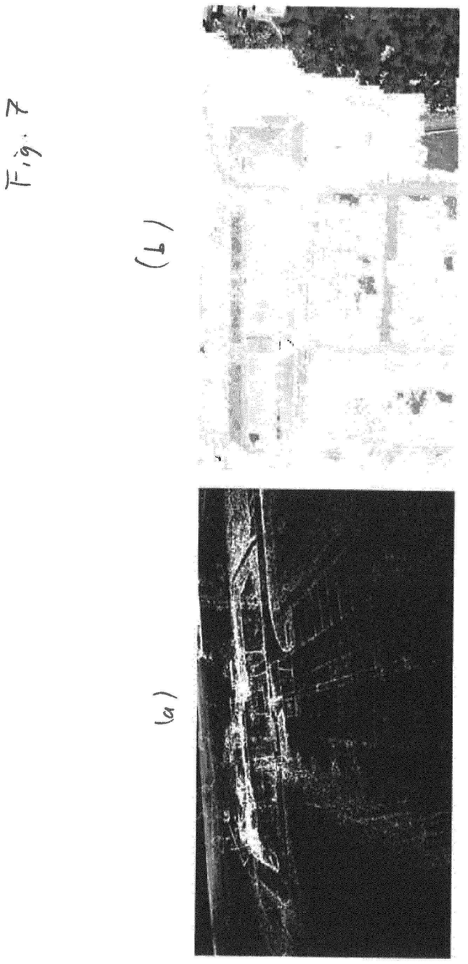

Die Fig. 7a und 7b illustrieren die Registrierung eines Lokalisierungssenders mit einem digitalen Terrain-Modell, welches als Orthodarstellung fungiert. Hierbei ist wiederum in Fig. 7a das errechnete Lokalisierungsmodell ausgehend von den Videodaten illustriert, welches dann in das Koordinatensystem eines digitalen Terrain-Modells (DTM) registriert und überführt wird.

Wie nochmals anhand dieser zwei Beispiele gezeigt ist, ermöglicht das oben Bezug nehmend auf Fig. 1a und 1b erläuterte Verfahren die Anzeige von Bildinhalten auf einer 2D-Karte mit einer übersichtlichen Darstellung und geo-referenzierten Objekten.

Entsprechend weiteren Ausführungsbeispielen wird ein Verfahren zur Kalibrierung an einer Kamera oder mehreren Kameras eines Kameranetzwerks geschaffen, das das oben erläuterte Verfahren ausführt, um die Geo-Referenzierung durchzuführen. Hierbei ist es vorteilhaft, dass der Kalibriervorgang vollkommen automatisch durchgeführt wird und ohne GPS-Sensoren durchgeführt werden kann. Hierbei sei angemerkt, dass die Kalibrierung sowohl für stationäre als auch für semistationäre oder sogar Ad-Hoc-Netzwerke eingesetzt werden kann.

Bei der Kalibrierung können sowohl die in dem Videonetzwerk anhängigen Videodaten verwendet werden oder auch zusätzliche Videodaten hinzugefügt werden. Hierbei sei angemerkt, dass die zusätzlichen Aufnahmen bevorzugt eine ähnliche Sichtrichtung (Abweichung kleiner 30 oder 45 Grad) in Bezug zu den zu kalibrierenden Kameras enthalten soll.

Ein weiteres Ausführungsbeispiel schafft eine Vorrichtung zur Durchführung des oben erläuterten Kalibrierprozesses. Diese Vorrichtung umfasst zumindest zwei Schnittstellen, nämlich eine Schnittstelle für die Kameraaufnahme und eine Schnittstelle zum Empfangen der Orthodarstellungen. Entsprechend weiteren Ausführungsbeispielen kann diese Vorrichtung auch zu einem System erweitert werden, wenn die Vorrichtung mit einer Kamera kombiniert wird.

Die herkömmliche Kalibrierung erfolgt hierbei meist durch die manuelle Annotation von korrespondierenden Bild- und Kartenpunkten. Da dies jedoch eine Benutzerinteraktion erfordert, kann dieser Prozess nicht automatisiert werden. Mit Hilfe des beschriebenen Verfahrenswegs ergeben sich dadurch folgende Vorteile: Durch die zusätzliche Erfassung der Umgebung kann automatisch eine geo-referenzierte 3D-Darstellung der Umgebung errechnet werden. Dadurch lassen sich durch einen Schnitt mit gerenderten Ansichten der 2D-Karte Sichtstrahlen der Kameras geo-referenziert verorten. Die bildbasierte Geo-Referenzierung mit 2D-Karten (Orthofotos) erlaubt hierbei eine exakte Passung der Bodenebene im Orthofoto und des Lokalisierungs- und Kalibrierungsindex.

Bezug nehmend auf obige Ausführungsbeispiele sei noch einmal darauf hingewiesen, dass bei der 3D-Rekonstruktion insbesondere Videodaten geeignet sind, bei denen eine ausreichende Bewegung der Kamera stattgefunden hat, um das Lokalisierungsmodell für das 3D-Modell zu errechnen. Wenn man davon ausgeht, dass die weiteren Videoaufnahmen durch eine externe Kamera stattfinden, sei darauf hingewiesen, dass möglichst ähnliche Sichtrichtungen wie die Kameraansichten des Videonetzwerks erstellt werden sollen, so dass eine automatische Zuordnung zwischen den aufgenommenen Bildern und den Bildern des Videonetzwerks hergestellt werden. Beispielsweise würde ein Winkelunterschied von max. 30 Grad der Aufnahmerichtung als geeignet angesehen.

Entsprechend weiteren Ausführungsbeispielen besteht die Möglichkeit, die erhaltenen Daten mit weiteren Daten von hochgenauen, nicht abbildenden Sensoriken, wie z. B. GPS-Empfängern, Beschleunigungsmessern, Gyroskopen, Barometern oder einem Magnetkompass, zu kombinieren. Dies bedingt eine Erweiterung der Hardware-Ausstattung der Videosensorik.

Entsprechend Ausführungsbeispielen kann das oben erläuterte Verfahren 100 und insbesondere die Schritte 130, 140 und 150 hierbei entweder intensitätsbasierte (z.B. Optimierung der Mutual Information) oder landmarkenbasierte Verfahren (z.B. Sift/SURF in Verbindung mit affin covarianten Detektoren) oder moderne CNN basierte Korrespondenzverfahren nutzen, um die nötigen Korrespondenzen zu bestimmen und damit die initiale Transformation zu schätzen. Die errechnete Überlagerung 150 kann wie bereits beschrieben weiter benutzt werden um weitere Kameras zu referenzieren oder 3D Strukturen aus einer Bildfolge zu georeferenzieren.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren (100) zur 3D-Referenzierung, mit folgenden Schritten:
Aufnehmen (110) aus einer ersten Kameraperspektive von mindestens vier homologen Punkten zumindest eines Objekts in einer ersten Aufnahme;
Aufnehmen (110) aus einer zweiten Kameraperspektive von den mindestens vier homologen Punkten (12a, 12b, 12c, 12d, 12a', 12b', 12c', 12d') in einer zweiten Aufnahme;
Erhalten (120) einer 2D-Orthodarstellung (14) in einer Gegend, in der sich die mindestens vier homologen Punkte (12a, 12b, 12c, 12d, 12a', 12b', 12c', 12d') befinden;
Registrieren (130) der mindestens vier homologen Punkte (12a, 12b, 12c, 12d, 12a', 12b', 12c', 12d') in der ersten Aufnahme in der 2D-Orthodarstellung (14), wobei die Positionen von Punkten in der 2D-Orthodarstellung (14) bekannt sind, so dass beim Schritt des Registrierens (130) der mindestens vier homologen Punkte (12a, 12b, 12c, 12d, 12a', 12b', 12c', 12d') eine Positionsinformation der registrierten vier homologen Punkte (12a, 12b, 12c, 12d, 12a', 12b', 12c', 12d') erhalten wird;
Transformieren (140) der 2D-Orthodarstellung (14) in eine mit der ersten Kameraperspektive identische Kameraperspektive, um eine virtuelle Ansicht (14') der 2D-Orthodarstellung (14) zu erhalten; wobei der Schritt des Transformierens (140) der 2D-Orthodarstellung (14) einen Unterschritt des Ermittelns von Schnittpunkten von Sichtlinien der Bildinhalte der ersten Aufnahme mit Bildinhalten in der 2D-Orthodarstellung (14) umfasst;
Rekonstruieren von 3D-Positionen der mindestens vier homologen Punkte (12a, 12b, 12c, 12d, 12a', 12b', 12c', 12d') auf Basis der ersten und zweiten Aufnahme in einem Kamerakoordinatensystem sowie 3D-Rekonstruieren von Objekten, zu welchen die mindestens vier homologen Punkte (12a, 12b, 12c, 12d, 12a', 12b', 12c', 12d') gehören,
Bestimmung von 3D/3D-Korrespondenzen durch Überlagern (150') der virtuellen Ansicht der 2D-Orthodarstellung (14) mit einem bei dem 3D-Rekonstruieren entstandenen Raum (13).

2. Verfahren (100) gemäß einem der vorherigen Ansprüche, wobei der Schritt des Transformierens (140) den Unterschritt des Bestimmens einer 3D Ähnlichkeitstransformation umfasst; oder
wobei der Schritt des Transformierens (140) den Unterschritt des Bestimmens einer 3D Ähnlichkeitstransformation umfasst, und wobei die 3D-Ähnlichkeitstransformation in Bezug auf sieben Freiheitsgrade durchgeführt wird.

3. Verfahren (100) gemäß einem der vorherigen Ansprüche, wobei der Schritt des Transformierens (140) unter Zuhilfenahme eines Inlieralgorithmus oder eines robusten Schätzverfahrens durchgeführt wird.

4. Verfahren (100) gemäß einem der vorherigen Ansprüche, wobei beim Registrieren (130) von Bildinhalten der ersten Aufnahme in der 2D-Orthodarstellung (14) eine Blickwinkelbestimmung der ersten Aufnahme erfolgt.

5. Verfahren (100) gemäß einem der vorherigen Ansprüche, wobei das Verfahren (100) ohne Kenntnis oder Abschätzung der Kameraposition durchgeführt wird.

6. Verfahren (100) gemäß einem der vorherigen Ansprüche, wobei das Verfahren (100) den Schritt des Aufnehmens (110) aus einer zweiten Kameraperspektive von den mindestens vier homologen Punkten (12a, 12b, 12c, 12d, 12a', 12b', 12c', 12d') in einer zweiten Aufnahme sowie des Rekonstruierens von 3D-Positionen der mindestens vier homologen Punkte (12a, 12b, 12c, 12d, 12a', 12b', 12c', 12d') auf Basis der ersten und zweiten Aufnahme in einem Kamerakoordinatensystem umfasst, und wobei sich die zweite Kameraperspektive von der ersten Kameraperspektive dadurch unterscheidet, dass eine Kamerabewegung stattgefunden hat.

7. Verfahren (100) gemäß einem der vorherigen Ansprüche, wobei sich die zweite Kameraperspektive von der ersten Kameraperspektive dadurch unterscheidet, dass die vier homologen Punkte (12a, 12b, 12c, 12d, 12a', 12b', 12c', 12d') aus unterschiedlichen Blickwinkeln aufgenommen sind.

8. Verfahren (100) gemäß einem der vorherigen Ansprüche, wobei der Schritt des Aufnehmens (110) von den mindestens vier homologen Punkten (12a, 12b, 12c, 12d, 12a', 12b', 12c', 12d') für eine Vielzahl von Kameraperspektiven wiederholt wird, um eine Vielzahl von Aufnahmen zu erhalten; und/oder
wobei die Vielzahl der Aufnahmen zu einer Videosequenz gehört.

9. Verfahren (100) gemäß einem der vorherigen Ansprüche, wobei das Ergebnis der 3D-Rekonstruktion neben dem rekonstruierten Objekt eine Lokalisierung der mindestens vier homologen Punkte (12a, 12b, 12c, 12d, 12a', 12b', 12c', 12d') in einem Kamerakoordinatensystem umfasst; und
wobei bei dem Schritt des Überlagerns (150) das Kamerakoordinatensystem mit dem bekannten Koordinatensystem der 2D-Orthodarstellung (14) überlagert wird.

10. Verfahren (100) gemäß einem der vorherigen Ansprüche, wobei der Schritt des Registrierens (130) für Bildinhalte der zweiten Aufnahme in der 2D-Orthodarstellung (14) wiederholt wird; oder
wobei der Schritt des Registrierens (130) für Bildinhalte der zweiten Aufnahme in der 2D-Orthodarstellung (14) wiederholt wird; und wobei durch die zweite Aufnahme (10b) eine Optimierung von Positionsinformationen der mindestens vier homologen Punkte (12a, 12b, 12c, 12d, 12a', 12b', 12c', 12d') erfolgt.

11. Verfahren (100) gemäß einem der vorherigen Ansprüche, wobei das Transformieren (140) der 2D-Orthodarstellung (14) in eine mit der ersten Kameraperspektive identische Kameraperspektive so durchgeführt wird, um eine virtuelle Ansicht (14') der 2D-Orthodarstellung (14) zu erhalten, die der ersten Kameraperspektive im Wesentlichen gleicht; wobei das Verfahren (100) den Schritt des Registrierens (130) der mindestens vier homologen Punkte (12a, 12b, 12c, 12d, 12a', 12b', 12c', 12d') in der ersten Aufnahme umfasst; wobei die Positionen von Punkten in der 2D-Orthodarstellung (14) bekannt sind, so dass beim Schritt des Registrierens (130) der mindestens vier homologen Punkte (12a, 12b, 12c, 12d, 12a', 12b', 12c', 12d') eine Positionsinformation der registrierten vier homologen Punkte (12a, 12b, 12c, 12d, 12a', 12b', 12c', 12d') erhalten wird; wobei der Schritt des Transformierens (140) den Unterschritt des Bestimmens einer 3D Ähnlichkeitstransformation umfasst und wobei der Schritt des Transformierens (140) der 2D-Orthodarstellung (14) einen Unterschritt des Ermittelns von Schnittpunkten von Sichtlinien der Bildinhalte der ersten Aufnahme mit Bildinhalten in der 2D-Orthodarstellung (14) umfasst.

12. Computerprogramm zur Durchführung des Verfahrens nach einem der Ansprüche 1 bis 11, wenn das Programm auf einem Computer läuft.

13. Vorrichtung zur 3D-Referenzierung, mit folgenden Merkmalen:
einer Kameraschnittstelle zum Erhalten (120) einer ersten Aufnahme aus einer ersten Kameraperspektive von mindestens vier homologen Punkten (12a, 12b, 12c, 12d, 12a', 12b', 12c', 12d') zumindest eines Objekts und zum Erhalten (120) einer zweiten Aufnahme von den mindestens vier homologen Punkten (12a, 12b, 12c, 12d, 12a', 12b', 12c', 12d') aus einer zweiten Kameraperspektive;
einer Schnittstelle zum Erhalten (120) einer 2D-Orthodarstellung (14) einer Gegend, in der die vier homologen Punkte (12a, 12b, 12c, 12d, 12a', 12b', 12c', 12d')liegen;
einem Prozessor zum Registrieren (130) der mindestens vier homologen Punkte (12a, 12b, 12c, 12d, 12a', 12b', 12c', 12d') in der ersten Aufnahme in der 2D-Orthodarstellung (14), wobei die Positionen von Punkten in der 2D-Orthodarstellung (14) bekannt sind, so dass beim Schritt des Registrierens (130) der mindestens vier homologen Punkte (12a, 12b, 12c, 12d, 12a', 12b', 12c', 12d') eine Positionsinformation der registrierten vier homologen Punkte (12a, 12b, 12c, 12d, 12a', 12b', 12c', 12d') erhalten wird;
wobei der Prozessor ausgebildet ist, um die 2D-Orthodarstellung (14) in eine mit der ersten Kameraperspektive identische Kameraperspektive zu transformieren, um eine virtuelle Ansicht (14') der 2D-Orthodarstellung (14) zu erhalten; wobei das Transformieren (140) der 2D-Orthodarstellung (14) das Ermitteln von Schnittpunkten von Sichtlinien der Bildinhalte der ersten Aufnahme mit Bildinhalten in der 2D-Orthodarstellung (14) umfasst;
wobei der Prozessor ausgebildet ist, um 3D-Positionen der mindestens vier homologen Punkte (12a, 12b, 12c, 12d, 12a', 12b', 12c', 12d') auf Basis der ersten und zweiten Aufnahme in einem Kamerakoordinatensystem zu rekonstruieren sowie eine 3D-Rekonstruieren von Objekten, zu welchen die mindestens vier homologen Punkte (12a, 12b, 12c, 12d, 12a', 12b', 12c', 12d') gehören, durzuführen; um 3D/3D-Korrespondenzen durch Überlagern (150') der virtuellen Ansicht der 2D-Orthodarstellung (14) mit einem bei dem 3D-Rekonstruieren entstandenen Raum (13) zu bestimmen.

14. System umfassend mindestens eine Kamera sowie die Vorrichtung nach Anspruch 13.

## Claims

1. Method (100) of 3D referencing, comprising:
capturing (110), from a first camera perspective, at least four homologous points of at least one object in a first picture;
capturing (110), from a second camera perspective, the at least four homologous points (12a, 12b, 12c, 12d, 12a', 12b', 12c', 12d') in a second picture;
obtaining (120) a 2D ortho-depiction (14) in a region in which the at least four homologous points (12a, 12b, 12c, 12d, 12a', 12b', 12c', 12d') are located;
registering (130) the at least four homologous points (12a, 12b, 12c, 12d, 12a', 12b', 12c', 12d') in the first picture in the 2D ortho-depiction (14), the positions of points in the 2D ortho-depiction (14) being known, so that in the step of registering (130) the at least four homologous points (12a, 12b, 12c, 12d, 12a', 12b', 12c', 12d'), positional information of the registered four homologous points (12a, 12b, 12c, 12d, 12a', 12b', 12c', 12d') is obtained;
transforming (140) the 2D ortho-depiction (14) to a camera perspective identical to the first camera perspective so as to obtain a virtual view (14') of the 2D ortho-depiction (14); the step of transforming (140) the 2D ortho-depiction (14) including a substep of determining points of intersection of lines of vision of the image contents of the first picture with image contents in the 2D ortho-depiction (14);
reconstructing 3D positions of the at least four homologous points (12a, 12b, 12c, 12d, 12a', 12b', 12c', 12d') on the basis of the first and second pictures in a camera coordinate system, and 3D-reconstructing objects to which the at least four homologous points (12a, 12b, 12c, 12d, 12a', 12b', 12c', 12d') belong,
determining 3D/3D correspondences by superimposing (150') the virtual view of the 2D ortho-depiction (14) by a space (13) that was created during 3D-reconstructing.

2. Method (100) as claimed in any of the previous claims, wherein the step of transforming (140) includes the substep of determining a 3D similarity transformation; or
wherein the step of transforming (140) includes the substep of determining a 3D similarity transformation, and wherein the 3D similarity transformation is performed with reference to seven degrees of freedom.

3. Method (100) as claimed in any of the previous claims, wherein the step of transforming (140) is performed with the aid of an inlier algorithm or a robust estimation method.

4. Method (100) as claimed in any of the previous claims, wherein during registering (130) of image contents of the first picture in the 2D ortho-depiction (14), the angle of view of the first picture is determined.

5. Method (100) as claimed in any of the previous claims, the method (100) being performed without knowledge or estimation of the camera position.

6. Method (100) as claimed in any of the previous claims, the method (100) including the step of capturing (110), from a second camera perspective, the at least four homologous points (12a, 12b, 12c, 12d, 12a', 12b', 12c', 12d') in a second picture as well as of reconstructing 3D positions of the at least four homologous points (12a, 12b, 12c, 12d, 12a', 12b', 12c', 12d') on the basis of the first and second pictures in a camera coordinate system, and wherein the second camera perspective differs from the first camera perspective in that a camera movement has taken place.

7. Method (100) as claimed in any of the previous claims, wherein the second camera perspective differs from the first camera perspective in that the four homologous points (12a, 12b, 12c, 12d, 12a', 12b', 12c', 12d') are captured from different angles of view.

8. Method (100) as claimed in any of the previous claims, wherein the step of capturing (110) the at least four homologous points (12a, 12b, 12c, 12d, 12a', 12b', 12c', 12d') is repeated for a multitude of camera perspectives so as to obtain a multitude of pictures; and/or
wherein the multitude of pictures belong to a video sequence.

9. Method (100) as claimed in any of the previous claims, wherein the result of the 3D reconstruction includes, in addition to the reconstructed object, localization of the at least four homologous points (12a, 12b, 12c, 12d, 12a', 12b', 12c', 12d') in a camera coordinate system; and
wherein in the step of superimposing (150), the camera coordinate system is superimposed by the known coordinate system of the 2D ortho-depiction (14).

10. Method (100) as claimed in any of the previous claims, wherein the step of registering (130) is repeated for image contents of the second picture in the 2D ortho-depiction (14); or
wherein the step of registering (130) is repeated for image contents of the second picture in the 2D ortho-depiction (14); and wherein optimization of positional information of the at least four homologous points (12a, 12b, 12c, 12d, 12a', 12b', 12c', 12d') is effected by the second picture (10b).

11. Method (100) as claimed in any of the previous claims, wherein transforming (140) of the 2D ortho-depiction (14) to a camera perspective identical to the first camera perspective is performed to obtain a virtual view (14') of the 2D ortho-depiction (14) that is essentially the same as the first camera perspective; wherein the method (100) includes the step of registering (130) the at least four homologous points (12a, 12b, 12c, 12d, 12a', 12b', 12c', 12d') in the first picture; wherein the positions of points in the 2D ortho-depiction are known, so that in the step of registering (130) the at least homologous points (12a, 12b, 12c, 12d, 12a', 12b', 12c', 12d'), positional information of the registered four homologous points (12a, 12b, 12c, 12d, 12a', 12b', 12c', 12d') is obtained; wherein the step of transforming (140) includes the substep of determining a 3D similarity transformation, and wherein the step of transforming (140) the 2D ortho-depiction (14) includes a substep of determining points of intersection of lines of vision of the image contents of the first picture with image contents in the 2D ortho-depiction (14).

12. Computer program from performing the method as claimed in any of claims 1 to 11, wherein the program runs on a computer.

13. Device for 3D referencing, comprising:
a camera interface for obtaining (120), from a first camera perspective, a first picture of at least four homologous points (12a, 12b, 12c, 12d, 12a', 12b', 12c', 12d') of at least one object, and for obtaining (120) a second picture of the at least four homologous points (12a, 12b, 12c, 12d, 12a', 12b', 12c', 12d') from a second camera perspective;
an interface for obtaining (120) a 2D ortho-depiction (14) of a region in which the four homologous points (12a, 12b, 12c, 12d, 12a', 12b', 12c', 12d') are located;
a processor for registering (130) the at least four homologous points (12a, 12b, 12c, 12d, 12a', 12b', 12c', 12d') in the first picture in the 2D ortho-depiction (14), the positions of points in the 2D ortho-depiction (14) being known, so that in the step of registering (130) the at least four homologous points (12a, 12b, 12c, 12d, 12a', 12b', 12c', 12d'), positional information of the registered four homologous points (12a, 12b, 12c, 12d, 12a', 12b', 12c', 12d') is obtained;
the processor being configured to transform the 2D ortho-depiction (14) to a camera perspective identical to the first camera perspective so as to obtain a virtual view (14') of the 2D ortho-depiction (14); wherein transforming (140) the 2D ortho-depiction (14) includes determining points of intersection of lines of vision of the image contents of the first picture with image contents in the 2D ortho-depiction (14);
the processor being configured to reconstruct 3D positions of the at least four homologous points (12a, 12b, 12c, 12d, 12a', 12b', 12c', 12d') on the basis of the first and second pictures in a camera coordinate system and to determine a 3D reconstruction of objects to which the at least four homologous points (12a, 12b, 12c, 12d, 12a', 12b', 12c', 12d') belong; so as to determine 3D/3D correspondences by superimposing (150') the virtual view of the 2D ortho-depiction (14) by a space (13) that was created during 3D-reconstructing.

14. System including at least one camera as well as the device as claimed in claim 13.

## Revendications

1. Procédé (100) de référencement 3D, aux étapes suivantes consistant à:
capturer (110), depuis une première perspective de caméra, au moins quatre points homologues d'au moins un objet dans une première prise de vue;
capturer (110), depuis une deuxième perspective de caméra, les au moins quatre points homologues (12a, 12b, 12c, 12d, 12a', 12b', 12c', 12d') dans une deuxième prise de vue;
obtenir (120) une ortho-représentation 2D (14) dans un environnement dans lequel se trouvent les au moins quatre points homologues (12a, 12b, 12c, 12d, 12a', 12b', 12c', 12d');
enregistrer (130) les au moins quatre points homologues (12a, 12b, 12c, 12d, 12a', 12b', 12c', 12d') dans la première prise de vue dans l'ortho-représentation 2D (14), où les positions des points dans l'ortho-représentation 2D (14) sont connues, de sorte que soit obtenue, à l'étape d'enregistrement (130) des au moins quatre points homologues (12a, 12b, 12c, 12d, 12a', 12b', 12c', 12d'), une information de position des quatre points homologues (12a, 12b, 12c, 12d, 12a', 12b', 12c', 12d') enregistrés;
transformer (140) l'ortho-représentation 2D (14) en une perspective de caméra identique à la première perspective de caméra pour obtenir une vue virtuelle (14') de l'ortho-représentation 2D (14); où l'étape de transformation (140) de l'ortho-représentation 2D (14) comporte une sous-étape consistant à déterminer les points d'intersection des lignes de visée des contenus d'image de la première prise de vue avec les contenus d'image dans l'ortho-représentation 2D (14);
reconstruire les positions 3D des au moins quatre points homologues (12a, 12b, 12c, 12d, 12a', 12b', 12c', 12d') sur base de la première et de la deuxième prise de vue dans un système de coordonnées de caméra ainsi que reconstruire en 3D les objets auxquels appartiennent les au moins quatre points homologues (12a, 12b, 12c, 12d, 12a', 12b', 12c', 12d'),
déterminer les correspondances 3D/3D en superposant (150') la vue virtuelle de l'ortho-représentation 2D (14) par un espace (13) créé lors de la reconstruction en 3D.

2. Procédé (100) selon l'une des revendications précédentes, dans lequel l'étape de transformation (140) comporte la sous-étape consistant à déterminer une transformation de similitude 3D; ou dans lequel l'étape de transformation (140) comporte la sous-étape consistant à déterminer une transformation de similitude 3D, et dans lequel la transformation de similitude 3D est effectuée par rapport à sept degrés de liberté.

3. Procédé (100) selon l'une des revendications précédentes, dans lequel l'étape de transformation (140) est effectuée à l'aide d'un algorithme "inlier" ou d'un procédé d'estimation robuste.

4. Procédé (100) selon l'une des revendications précédentes, dans lequel a lieu, lors de l'enregistrement (130) des contenus d'image de la première prise de vue dans l'ortho-représentation 2D (14), une détermination de l'angle de vision de la première prise de vue.

5. Procédé (100) selon l'une des revendications précédentes, dans lequel le procédé (100) est effectué sans connaissance ou estimation de la position de la caméra.

6. Procédé (100) selon l'une des revendications précédentes, dans lequel le procédé (100) comporte l'étape consistant à prendre une vue (110) depuis une deuxième perspective de caméra des au moins quatre points homologues (12a, 12b, 12c, 12d, 12a', 12b', 12c', 12d') dans une deuxième prise de vue ainsi qu'à reconstruire les positions 3D des au moins quatre points homologues (12a, 12b, 12c, 12d, 12a', 12b', 12c', 12d') sur base de la première et de la deuxième prise de vue dans un système de coordonnées de caméra, et dans lequel la deuxième perspective de caméra diffère de la première perspective de caméra par le fait qu'il s'est produit un mouvement de caméra.

7. Procédé (100) selon l'une des revendications précédentes, dans lequel la deuxième perspective de caméra diffère de la première perspective de caméra en ce que les quatre points homologues (12a, 12b, 12c, 12d, 12a', 12b', 12c', 12d') sont photographiés sous différents angles.

8. Procédé (100) selon l'une des revendications précédentes, dans lequel l'étape de la prise de vue (110) des au moins quatre points homologues (12a, 12b, 12c, 12d, 12a', 12b', 12c', 12d') est répétée pour une pluralité de perspectives de caméra pour obtenir une pluralité de prises de vue; et/ou
dans lequel la pluralité de prises de vue appartient à une séquence vidéo.

9. Procédé (100) selon l'une des revendications précédentes, dans lequel le résultat de la reconstruction en 3D comporte, en dehors de l'objet reconstruit, une localisation des au moins quatre points homologues (12a, 12b, 12c, 12d, 12a', 12b', 12c', 12d') dans un système de coordonnées de caméra; et
dans lequel, à l'étape de superposition (150), le système de coordonnées de caméra est superposé au système de coordonnées de caméra connu de l'ortho-représentation 2D (14).

10. Procédé (100) selon l'une des revendications précédentes, dans lequel l'étape d'enregistrement (130) est répétée pour les contenus d'image de la deuxième prise de vue dans l'ortho-représentation 2D (14); ou
dans lequel l'étape d'enregistrement (130) est répétée pour les contenus d'image de la deuxième prise de vue dans l'ortho-représentation 2D (14); et dans lequel a lieu, par la deuxième prise de vue (10b), une optimisation des informations de position des au moins quatre points homologues (12a, 12b, 12c, 12d, 12a', 12b', 12c', 12d').

11. Procédé (100) selon l'une des revendications précédentes, dans lequel la transformation (140) de l'ortho-représentation 2D (14) en une perspective de caméra identique à la première perspective de caméra est effectuée de manière à obtenir une vue virtuelle (14') de l'ortho-représentation 2D (14) qui est sensiblement identique à la première perspective de caméra; dans lequel le procédé (100) comporte l'étape consistant à enregistrer (130) les au moins quatre points homologues (12a, 12b, 12c, 12d, 12a', 12b', 12c', 12d') dans la première prise de vue; dans lequel les positions des points dans l'ortho-représentation 2D (14) sont connues de sorte que soit obtenue, à l'étape consistant à enregistrer (130) les au moins quatre points homologues (12a, 12b, 12c, 12d, 12a', 12b', 12c', 12d'), une information de position des quatre points homologues (12a, 12b, 12c, 12d, 12a', 12b', 12c', 12d') enregistrés; dans lequel l'étape de transformation (140) comporte la sous-étape consistant à déterminer une transformation de similitude 3D et dans lequel l'étape de transformation (140) de l'ortho-représentation 2D (14) comporte une sous-étape consistant à déterminer les points d'intersection des lignes de visée des contenus d'image de la première prise de vue avec les contenus d'image dans l'ortho-représentation 2D (14).

12. Programme d'ordinateur pour la mise en oeuvre du procédé selon l'une des revendications 1 à 11 lorsque le programme est exécuté sur un ordinateur.

13. Dispositif de référencement 3D, aux caractéristiques suivantes:
une interface de caméra destinée à obtenir (120) une première prise de vue depuis une première perspective de caméra d'au moins quatre points homologues (12a, 12b, 12c, 12d, 12a', 12b', 12c',
12d') d'au moins un objet et à obtenir (120) une deuxième prise de vue des au moins quatre points homologues (12a, 12b, 12c, 12d, 12a', 12b', 12c', 12d') depuis une deuxième perspective de caméra;
une interface destinée à obtenir (120) une ortho-représentation 2D (14) d'un environnement dans lequel se situent les quatre points homologues (12a, 12b, 12c, 12d, 12a', 12b', 12c', 12d');
un processeur destiné à enregistrer (130) les au moins quatre points homologues (12a, 12b, 12c, 12d, 12a', 12b', 12c', 12d') dans la première prise de vue dans l'ortho-représentation 2D (14), où les positions des points dans l'ortho-représentation 2D (14) sont connues, de sorte que soit obtenue, à l'étape d'enregistrement (130) des au moins quatre points homologues (12a, 12b, 12c, 12d, 12a', 12b', 12c', 12d'), une information de position des quatre points homologues (12a, 12b, 12c, 12d, 12a', 12b', 12c', 12d') enregistrés;
dans lequel le processeur est conçu pour transformer l'ortho-représentation 2D (14) en une perspective de caméra identique à la première perspective de caméra pour obtenir une vue virtuelle (14') de l'ortho-représentation 2D (14); dans lequel la transformation (140) de l'ortho-représentation 2D (14) comporte le fait de déterminer les points d'intersection des lignes de visée des contenus d'image de la première prise de vue avec les contenus d'image dans l'ortho-représentation 2D (14);
dans lequel le processeur est conçu pour reconstruire les positions 3D des au moins quatre points homologues (12a, 12b, 12c, 12d, 12a', 12b', 12c', 12d') sur base de la première et de la deuxième prise de vue dans un système de coordonnées de caméra ainsi que pour effectuer une reconstruction 3D des objets auxquels appartiennent les au moins quatre points homologues (12a, 12b, 12c, 12d, 12a', 12b', 12c', 12d'); pour déterminer les correspondances 3D/3D en superposant (150') la vue virtuelle de l'ortho-représentation 2D (14) par un espace (13) créé lors de la reconstruction 3D.

14. Système comportant au moins une caméra ainsi que le dispositif selon la revendication 13.
